# EUROPÄISCHE PATENTSCHRIFT

(11) **EP 3 208 594 B1**
(45) Veröffentlichungstag und Bekanntmachung des Hinweises auf die Patenterteilung: **12.06.2019**
(21) Anmeldenummer: 16156585.8
(22) Anmeldetag: 19.02.2016
(51) Int. Cl.: G01M 13/02

(54) **AKTOR**
ACTUATOR
ACTIONNEUR

(43) Veröffentlichungstag der Anmeldung: 23.08.2017
(73) Patentinhaber: Fertigungsgerätebau A. Steinbach GmbH & Co. KG, 97616 Salz bei Bad Neustadt (DE); ThyssenKrupp Presta AG, 9492 Eschen (LI)
(72) Erfinder: Wolf, Mario, 97616 Salz bei Bad Neustadt (DE); Gabel, Klaus, 97616 Salz bei Bad Neustadt (DE); Maier, Wolfgang Johann, 9492 Eschen (LI); Vith, Enrico, 9492 Eschen (LI)
(74) Vertreter: Hoffmann Eitle

(56) Entgegenhaltungen:
- DE-U1-202015 100 822
- US-A- 4 573 348

## Beschreibung

### Technisches Gebiet

Die vorliegende Erfindung betrifft einen Aktor, insbesondere zur Verwendung in einem Prüfstand, der beispielsweise bei der Entwicklung und Prüfung von Automobilkomponenten, zum Beispiel der Lenkung, Fahrwerkskomponenten, usw., eingesetzt wird.

### Stand der Technik

Im Stand der Technik sind Prüfeinheiten bekannt, die einen Linearaktor und einen Rotoraktor umfassen. Allerdings handelt es sich hierbei um mechanisch entkoppelte Systeme, die bspw. beim Einsatz für Prüfzwecke zu deutlichen Nachteilen führen. Rein beispielhaft soll an dieser Stelle auf Trägheiten und Umkehrspiele verwiesen werden.

Als technologischer Hintergrund ist die US 4,573,348 A bekannt, die einen Aktor zum winkligen Positionieren betrifft. Der Mechanismus umfasst eine erste und zweite Welle, einen ersten und zweiten Hebel sowie eine Quelle mit einem Druckfluid. Die zweite Welle ist in die erste Welle eingepasst. Ein erstes, mit der Druckfluidquelle kommunizierendes Mittel ist zum Drehen der ersten Welle vorgesehen. Ein zweites, mit der Druckfluidquelle kommunizierendes Mittel ist zum Drehen der zweiten Welle vorgesehen.

Ferner ist als nachveröffentlichtes Dokument die EP 3 062 427 A2 bekannt.

### Gegenstand der Erfindung

Ziel der vorliegenden Erfindung ist es, einen Aktor bereitzustellen, mit dem die oben genannten Probleme behoben werden können, und der bei minimalen Spiel- und Trägheitseinflüssen höhere Regelgüten mit einer kompakten Bauform erreicht.

Der Gegenstand des Anspruchs 1 stellt einen derartigen Aktor bereit. Weitere bevorzugte Ausführungsformen sind in den abhängigen Ansprüchen aufgeführt.

Entsprechend wird die Aufgabe der Erfindung durch einen Aktor, aufweisend:
eine Welle, wobei bevorzugt ist, dass sich die Welle zumindest abschnittsweise durch einen hydraulischen Betätigungsabschnitt erstreckt, wobei der hydraulische Betätigungsabschnitt eingerichtet ist, die Welle axial zu bewegen,
wobei sich die Welle ferner zumindest abschnittsweise durch einen Drehbetätigungsabschnitt erstreckt, welcher Drehbetätigungsabschnitt einen Stator aufweist, wobei im Drehbetätigungsabschnitt ein an der Welle, insbesondere einer Summierungswelle der Welle, befestigter Läufer vorgesehen ist,
wobei die Welle eine Kolbenstangenverlängerung sowie eine, mit der Kolbenstangenverlängerung verbundene, Summierungswelle aufweist, wobei die Summierungswelle einen Hohlraum aufweist und innerhalb des Hohlraums der Summierungswelle zumindest eine Zylinderkammer des hydraulischen Betätigungsabschnitts angeordnet ist, gelöst.

In die Zylinderkammer kann ein Fluid eingeführt werden, um eine (Axial-)Bewegung der Welle zu bewirken.

Der hydraulische Betätigungsabschnitt kann bevorzugt zwei Zylinderkammern ausbilden, die weiter bevorzugt durch einen Vorsprung der Summierungswelle getrennt werden.

Bevorzugt befindet die Zylinderkammer des hydraulischen Betätigungsabschnitts, weiter bevorzugt die zwei Zylinderkammern, in einem Bereich der Summierungswelle, in dem außerhalb der Summierungswelle ein Läufer des Drehbetätigungsabschnitts angeordnet ist.

Die Welle mit der Kolbenstangenverlängerung und der Summierungswelle kann einteilig oder mehrteilig sein.

Ferner kann sich die Summierungswelle zumindest abschnittsweise parallel zur Kolbenstangenverlängerung erstrecken.

Bevorzugt erfolgt die Verbindung der Kolbenstangenverlängerung mit der Summierungswelle über einen Flansch, wobei es sich weiter bevorzugt um einen Flansch der Kolbenstangenverlängerung handelt.

Ein derartiger Aktor ist insbesondere zur Verwendung in einem Prüfstand, beispielsweise für die Prüfung von Lenksystemen, vorgesehen.

Ein Gedanke der vorliegenden Erfindung ist es, einen hydraulischen Betätigungsabschnitt und einen Drehbetätigungsabschnitt in kompakter Weise mechanisch zu koppeln. Hierzu wird eine Welle vorgesehen, an der sowohl der hydraulische Betätigungsabschnitt als auch der Drehbetätigungsabschnitt angreift, so dass die Welle sowohl axial bewegt als auch rotatorisch betätigt werden kann.

Gemäß der vorliegenden Erfindung umfasst der Aktor einen hydraulischen Betätigungsabschnitt und einen Drehbetätigungsabschnitt, die an einer Welle des Aktors derart angreifen, dass die Welle sowohl axial bewegbar als auch rotatorisch betätigbar ist.

Nachdem sowohl der hydraulische Betätigungsabschnitt als auch der Drehbetätigungsabschnitt direkt an der Welle angreifen, und somit eine hybride Drehhubeinheit darstellen, wird ein gekoppeltes System bereitgestellt. Auf diese Weise können Spiel- und Trägheitseinflüsse minimiert und somit deutlich höhere Regelgüten erreicht werden. Folglich lassen sich Prüfdynamiken mit hohen Anforderungen umsetzen. Rein beispielhaft kann die Welle um 40mm axial bewegt und dabei frei gedreht werden.

Durch die beanspruchte Anordnung kann ferner eine kompakte Bauform erreicht werden, nachdem Abschnitte der Welle abschnittsweise parallel zueinander verlaufen.

Die Wahl eines hydraulischen Antriebs als Linearaktor und eines elektrischen Antriebs, insbesondere Servomotor/ Torquemotor, als Rotoraktor gewährleistet hierbei den Anforderungen entsprechend eine maximale Leistungsdichte und eine äußerst kompakte Bauart. Dies verstärkt die Vorteile einer kompakten Bauform nochmals.

Dabei umfasst die Welle eine sogenannte Kolbenstangenverlängerung sowie eine, insbesondere mit dem Flansch verbundene, Summierungswelle, wobei sich die Summierungswelle zumindest abschnittsweise parallel zur Kolbenstangenverlängerung erstreckt.

Besonders bevorzugt ist die Summierungswelle dabei als Hohlwelle ausgebildet, wobei die Kolbenstangenverlängerung innerhalb der Summierungswelle angeordnet ist. Die Summierungswelle und die Kolbenstangenverlägerung sind dann entsprechend bevorzugt zumindest abschnittsweise zueinander koaxial ausgerichtet. Diese bevorzugten Ausgestaltungen haben den Vorteil, dass ein besonders kompakter Aktor bereitgestellt werden kann.

Besonders ist es entsprechend zu bevorzugen, wenn die Summierungswelle, der Drehbetätigungsabschnitt und der hydraulische Betätigungsabschnitt koaxial zueinander angeordnet sind.

Ferner ist es bevorzugt, dass die Kolbenstangenverlängerung als Hohlwelle ausgebildet ist. Auf diese Weise kann eine Gewichtseinsparung erreicht werden.

Ferner kann die Kolbenstangenverlängerung, wie in der späteren Beschreibung näher erläutert, mit einem Messsystem zusammenwirken, um die axiale Position der Kolbenstangenverlängerung, und somit der Welle, sowie die rotatorische Position zu erfassen.

In einer weiteren Ausführungsform erstreckt sich zwischen der Kolbenstangenverlängerung und der Summierungswelle zumindest abschnittsweise eine bevorzugt feststehende Basiswelle, an deren Außenumfang hydrostatische Lager zur Abstützung der Summierungswelle vorgesehen sind. Diese Anordnung ermöglicht die Bereitstellung einer besonders kompakten und steifen Baugruppe.

Ferner kann zwischen den hydrostatischen Lagern ein Kolbenelement an der Basiswelle vorgesehen sein, wobei das Kolbenelement insbesondere durch eine Presspassung an der Basiswelle aufgebracht ist. Somit können Zylinderkammern innerhalb der Summierungswelle ausgebildet werden.

Insbesondere wird der hydraulische Betätigungsabschnitt ausgebildet durch einen in radialer Richtung nach innen weisenden Vorsprung der Summierungswelle sowie das insbesondere zwischen hydrostatischen Lagern angeordnete Kolbenelement.

Im teilweise ausgefahrenen Zustand werden bevorzugt an jeweils einer Seite zum Vorsprung der Summierungswelle und dem Kolbenelement (530) eine erste Zylinderkammer sowie eine zweite Zylinderkammer gebildet.

Ferner kann an einem freien Ende der Basiswelle eine Spannmutter auf ein Außengewinde in einem Endabschnitt der Basiswelle aufgeschraubt sein, welche Spannmutter die hydrostatischen Lager und das zwischen den hydrostatischen Lagern angeordnete Kolbenelement verspannt.

Ferner ist es bevorzugt, dass die Summierungswelle (543) an einer Seitenfläche eines Flanschs der Kolbenstangenverlängerung befestigt, insbesondere angeschraubt, ist.

Auch die nachfolgend genannten Aspekte können bei Aktor gemäß Anspruch 1 jeweils unabhängig voneinander zum Einsatz kommen.

Insbesondere wird, wie bereits eingangs erläutert, ein Aktor bereitgestellt, insbesondere zur Verwendung in einem Prüfstand, welcher Aktor aufweist: eine Welle, die sich bevorzugt zumindest abschnittsweise insbesondere durch einen hydraulischen Betätigungsabschnitt erstreckt, wobei ein hydraulischer Betätigungsabschnitt eingerichtet ist, die Welle axial zu bewegen, wobei sich die Welle ferner zumindest abschnittsweise durch einen Drehbetätigungsabschnitt erstreckt, welcher Drehbetätigungsabschnitt einen Stator aufweist, und ein im Drehbetätigungsabschnitt an der Welle befestigter Läufer vorgesehen ist.

Erfindungsgemäß wird bevorzugt im Bereich des Drehbetätigungsabschnitts ein Torquemotor als bürstenloser Wechselstrommotor verwendet. Somit stellt der Drehbetätigungsabschnitt einen langsam umlaufenden bzw. momententenstarken Antrieb bereit.

Im Rahmen der Erfindung ist der Drehbetätigungsabschnitt bevorzugt ein sogenannter Innenläufer, bei dem der Rotor an der Welle und der Stator am Gehäuse angebracht ist (bzw. das Gehäuse selbst den Stator darstellt).

In einer bevorzugten Ausführungsform der vorliegenden Erfindung ist die Welle durch hydrostatische Lager gelagert, wobei insbesondere im hydraulischen Betätigungsabschnitt zwei hydrostatische Lager vorgesehen sind. Durch Einsatz der hydrostatischen Lager kann eine hochgenaue Verstellbewegung sichergestellt werden. Darüber hinaus weisen hydrostatische Lager gute Dämpfungseigenschaften auf.

Ferner ist es bevorzugt, dass die Welle eine Kolbenstange bzw. Summierungswelle sowie eine an der Kolbenstange bzw. Summierungswelle angebrachte, insbesondere angeschraubte, Kolbenstangenverlängerung aufweist. Dieser Aufbau erleichtert die Montage des kompakt ausgebildeten Aktors.

Es ist bevorzugt, dass die Kolbenstange bzw. Summierungswelle und/oder die Kolbenstangenverlängerung als Hohlwelle ausgebildet sind. Somit wird eine Gewichtsreduzierung erreicht, und es ist möglich, einen Stift eines linearen Messsystems abschnittsweise in die Kolbenstangenverlängerung (oder auch die Kolbenstange bzw. Summierungswelle) einzuführen, um eine axiale Bewegung der Welle zu erfassen.

In einer Ausführungsform umfasst der hydraulische Betätigungsabschnitt ein insbesondere zylinderförmiges oder eckiges Gehäuse, welches Gehäuse zwei in axialer Richtung beabstandete Hydraulikleitungen aufweist, wobei in jeweils einer der Hydraulikleitungen eine Hydraulikflüssigkeit zugeführt wird, um die Welle axial zu bewegen. Dabei weist die Welle, insbesondere die Kolbenstange/Summierungswelle, zwischen den Öffnungen der Hydraulikleitungen einen größeren Durchmesser auf. Die wechselweise Betätigung der Hydraulikleitungen erfolgt bevorzugt mittels eines Servoventils.

Dabei ist es bevorzugt, dass jede Hydraulikleitung mit einem Pulsationsdämpfer fluidmäßig in Kontakt steht. Somit kann eine hochgenaue axiale Verstellbewegung sichergestellt werden.

In einer Ausführungsform ist es ferner vorgesehen, dass am Gehäuse eine Ventilbaugruppe mit einem Basiskörper angebracht ist, welche Ventilbaugruppe ein Servoventil umfasst, um wechselweise einen Zustrom einer Hydraulikflüssigkeit zu einer der Hydraulikleitungen bereitzustellen.

Ferner ist es bevorzugt, dass der Läufer im Bereich des Drehbetätigungsabschnitts beabstandet zur Welle vorgesehen ist. In einer konkreten Ausführungsform ist hierbei ein Abstandshalter an der Kolbenstange/Summierungswelle vorgesehen. Durch den Abstandshalter und einen Vorsprung der Kolbenstangenverlängerung, die einen größeren Durchmesser als die Kolbenstange/Summierungswelle aufweist, wird ein Träger gehalten, um den der Läufer gewickelt ist.

In einer weiteren Ausgestaltung der Erfindung erstreckt sich der Läufer in axialer Richtung entlang der Welle derart, dass sich der Läufer an Endpunkten der axialen Bewegung der Welle innerhalb des Stators befindet. Somit wird stets eine volle elektrische Überdeckung gewährleistet, so dass stets die gesamte Motorleistung (Drehzahl und Drehmoment) zur Verfügung steht.

Außerdem kann der Stator an einem Innenumfang eines zylinderförmigen oder eckigen Gehäuses des Drehbetätigungsabschnitts vorgesehen sein. Somit wird eine kompakte Bauform mit einer geringen Anzahl an Komponenten bereitgestellt.

Der erfindungsgemäße Aktor kann ferner ein Messsystem aufweisen, wobei das Messsystem ein rotatorisches Messsystem zur Erfassung einer Drehbewegung der Welle sowie ein lineares Messsystem zur Erfassung einer axialen Bewegung der Welle aufweist. Die vom Messsystem ermittelten Daten können zur Ansteuerung den hydraulischen Betätigungsabschnitt für eine axiale Bewegung der Welle sowie den Drehbetätigungsabschnitt für eine Drehbewegung der Welle eingesetzt werden.

### Kurze Beschreibung der Zeichnungen

- Figur 1: ist eine perspektivische Sicht einer ersten Ausführungsform.
- Figur 2: ist eine Schnittansicht, die den Aktor gemäß der ersten Ausführungsform mit eingefahrener Kolbenstange zeigt.
- Figur 3: ist eine Schnittansicht, die den Aktor gemäß Fig. 2 mit ausgefahrener Kolbenstange zeigt.
- Figur 4: ist eine Schnittansicht eines Aktors gemäß der vorliegenden Erfindung (zweite Ausführungsform) mit eingefahrener Kolbenstange.
- Figur 5: ist eine Schnittansicht eines Aktors gemäß der zweiten bevorzugten Ausführungsform mit teilweise ausgefahrener Kolbenstange.
- Figur 6: ist eine Schnittansicht eines Aktors gemäß der zweiten bevorzugten Ausführungsform mit ausgefahrener Kolbenstange.
- Figur 7: ist eine perspektivische Ansicht des Aktors gemäß der zweiten Ausführungsform.

### Detaillierte Beschreibung der bevorzugten Ausführungsformen

Nachfolgend werden anhand der beigefügten Figuren bevorzugte Ausführungsformen der vorliegenden Erfindung beschrieben.

Weitere in diesem Zusammenhang genannte Modifikationen bestimmter Elemente oder Baugruppen können jeweils einzeln miteinander kombiniert werden, um neue Ausführungsformen auszubilden.

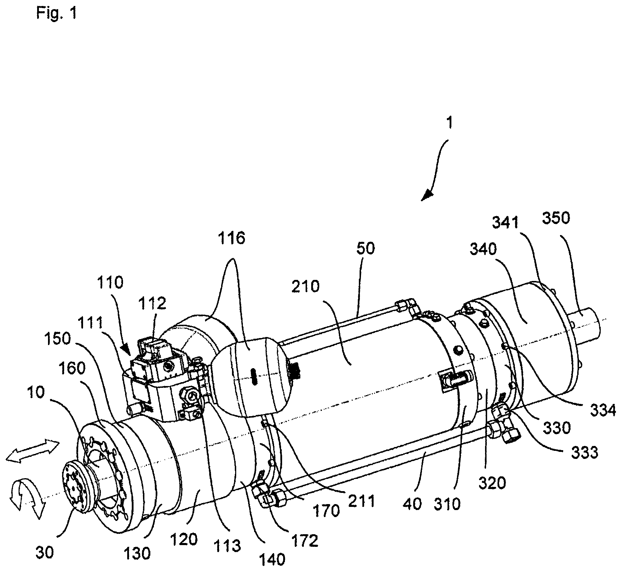

In Figuren 1-3 wird eine erste Ausführungsform eines Aktors 1 dargestellt, der als Ausgangspunkt zur Erläuterung der vorliegenden Erfindung dient. Der in den Figuren 1-3 dargestellte Aktor 1 ist nicht Teil dieser Erfindung, nachdem die beanspruchte Erfindung eine Welle mit einer Kolbenstangenverlängerung sowie einer, mit der Kolbenstangenverlängerung verbundene, Summierungswelle aufweist, wobei die Summierungswelle einen Hohlraum aufweist und innerhalb des Hohlraums der Summierungswelle zumindest eine Zylinderkammer des hydraulischen Betätigungsabschnitts angeordnet ist. Diese Anordnung wird auch als Parallelanordnung bezeichnet. Einzelelemente der ersten Ausführungsform können dennoch mit der beanspruchten Erfindung und insbesondere mit der erfindungsgemäßen zweiten Ausführungsform kombiniert werden.

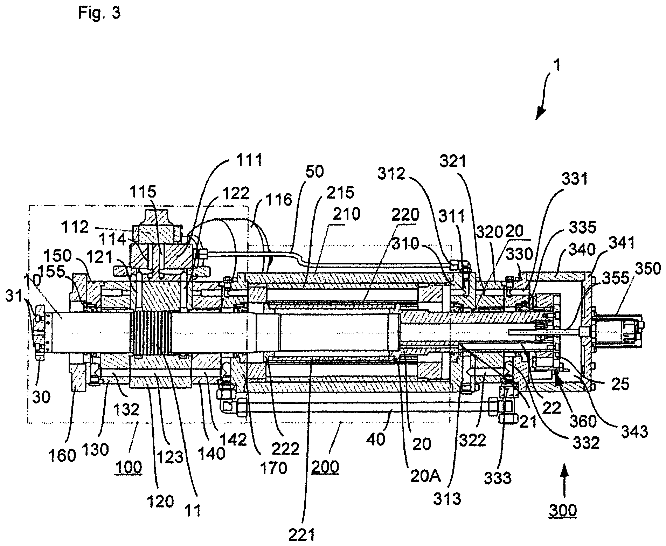

Der Aktor 1 umfasst, wie in Figur 3 angedeutet, mehrere Abschnitte, nämlich einen Linearaktor 100 (hydraulischen Betätigungsabschnitt), einen Rotoraktor 200 (Drehbetätigungsabschnitt) sowie ein Messsystem 300. Durch diese Abschnitte erstreckt sich zumindest teilweise eine Kolbenstange 10 bzw. eine fest mit der Kolbenstange 10 verbundene Kolbenstangenverlängerung 20. Die Kolbenstange 10 sowie die Kolbenstangenverlängerung werden auch als Welle bezeichnet.

Die Kolbenstange 10 ist bevorzugt als Hohlwelle ausgebildet. Obwohl die Kolbenstange 10 in der vorliegenden Ausführungsform einstückig ausgebildet ist, kann diese auch aus mehreren Einzelelementen zusammengesetzt sein.

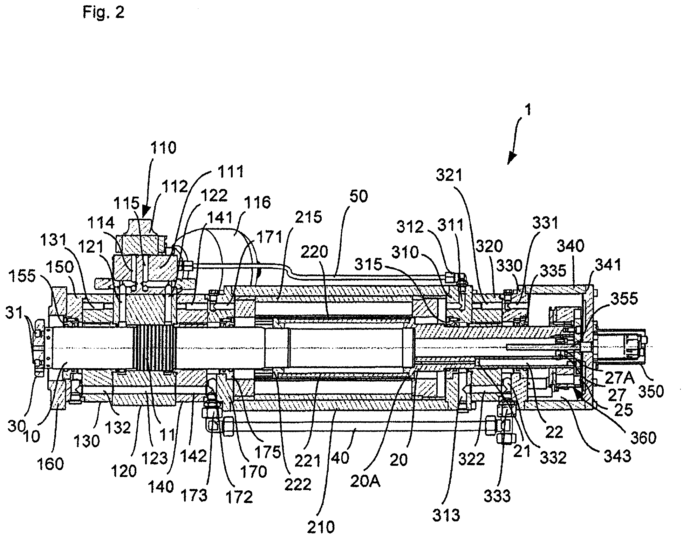

An einem Endabschnitt des Aktors 1 ragt die Kolbenstange 10 - zumindest im ausgefahrenen Zustand der Kolbenstange - hervor. An diesem Ende der Kolbenstange 10 ist eine Befestigungsplatte 30 mittels Schrauben 31 montiert. Die Befestigungsplatte 30 kann mit einem nicht dargestellten Prüfgegenstand verbunden werden, der durch den Aktor 1 mittels einer linearen und/oder rotatorischen Bewegung der Kolbenstange 10 entsprechenden Bewegungen, Kräften und/oder Momenten in diesen Richtungen ausgesetzt werden soll. Die mit der Kolbenstange 10 durchführbaren Bewegungen sind in Figur 1 mittels entsprechenden Pfeilen gekennzeichnet, und die Linearbewegung der Kolbenstange 10 ist ferner aus einer Zusammenschau der Figuren 2 und 3 ersichtlich. Rein beispielhaft kann die Kolbenstange 10 um 40mm bewegt und dabei frei gedreht werden.

Der Linearaktor 100 (hydraulischer hydrostatischer Linearaktors bzw. Servozylinder) umfasst eine Ventilbaugruppe 110. Die Ventilbaugruppe 110 weist eine Basis 111 sowie ein an der Basis 111 montiertes Servoventil 112 auf. Ferner sind an der Basis 111 Anschlüsse vorgesehen (lediglich ein Anschluss 113 ist in Figur 1 dargestellt), über die jeweils eine Hydraulikflüssigkeit zugeführt oder abgeführt werden kann. Dabei gelangt die Hydraulikflüssigkeit in eine erste Leitung 114 bzw. eine zweite Leitung 115, die sich durch die Basis 111 der Ventilbaugruppe 110 erstrecken. Mit den Leitungen 114, 115 ist jeweils ein an der Basis 111 montierter Pulsationsdämpfer 116 verbunden, der Pulsationen der Hydraulikflüssigkeit innerhalb der jeweiligen Leitung 114, 115 dämpft. Dies ermöglicht eine hochgenaue Betätigung der Kolbenstange 10.

Um eine kompakte Bauform des Aktors 1 bereitzustellen, sind die Pulsationsdämpfer 116 an einer gleichen Seite der Basis 111 befestigt, und erstrecken sich hiervon in - zu dieser Seite der Basis 111 - schrägen Richtungen.

Die Ventilbaugruppe 110 ist an einem zylinderförmig ausgebildeten Gehäuse 120 montiert. Innerhalb des Gehäuses 120 sind Leitungen 121, 122 vorgesehen, die in radialer Richtung verlaufen und mit der ersten Leitung 114 bzw. der zweiten Leitung 115 der Ventilbaugruppe 110 verbunden sind.

Somit kann jeweils eine Hydraulikflüssigkeit zur Kolbenstange 10 geleitet werden, um eine lineare Bewegung der Kolbenstange 10 herbeizuführen. Hierzu weist die Kolbenstange 10 im Bereich 11 zwischen den Öffnungen der Leitungen 121 und 122 einen vergrößerten Außendurchmesser auf, der mit gleichmäßig beabstandeten Umfangsnuten versehen ist.

Beidseitig des Gehäuses 120 ist jeweils ein hydrostatisches Lager 130, 140 zur Abstützung der Kolbenstange 10 vorgesehen. Die hydrostatischen Lager 130, 140 weisen jeweils einen in axialer Richtung verlaufenden Kanal 132 bzw. 142 auf, die mittels eines im Gehäuse 120 vorgesehenen Kanal 123 miteinander verbunden sind. Die Kanäle 132,123,142 stellen ein Leckölsystem dar, und führen das Lecköl nach den hydrostatischen Lagern zusammen und zurück.

Seitlich des hydrostatischen Lagers 130 ist ein Befestigungsring 150 vorgesehen, der einen Dichtungsring 155 mit Dichtungselementen aufnimmt, welche Dichtungselemente mit der Kolbenstange 10 in Kontakt stehen. Anschließend an den Befestigungsring 150 ist eine Abdeckplatte 160 angeordnet, die mittels mehrerer Schrauben, die durch Bohrungen im Befestigungsring 150 und Bohrungen 131 im hydrostatischen Lager 130 geführt sind, mit dem Gehäuse 120 verschraubt ist. Auf diese Weise werden die Abdeckplatte 160, der Befestigungsring 150 sowie das hydrostatische Lager 140 gegen das Gehäuse 120 gedrückt und somit fixiert.

Seitlich des hydrostatischen Lagers 140 ist an der dem Gehäuse 120 abgewandten Seite ein Zwischenring 170 vorgesehen. Der Zwischenring 170 ist mittels mehrerer Schrauben, die durch Bohrungen 141 des hydrostatischen Lagers 140 gelangen, mit dem Gehäuse 120 verbunden. Auf diese Weise werden der Zwischenring 170 und das hydrostatische Lager 140 gegen das Gehäuse 120 gedrückt und somit fixiert.

Der Zwischenring 170 weist ferner einen in Richtung des Außenumfangs des Zwischenrings 170 verlaufenden Kanal 172 sowie einen entsprechenden Anschluss 173 auf, welcher Kanal 172 mit dem Kanal 142 des hydrostatischen Lagers 140 in Verbindung steht. Am Anschluss 173 ist eine Verbindungsleitung 40 angeschlossen, über die das Lecköl nach den hydrostatischen Lagern zusammen und zurückgeführt wird.

Innerhalb des Zwischenrings 170 ist ferner ein Dichtungsring 175 mittels Schrauben angebracht, dessen Dichtungselemente mit der Kolbenstange 10 in Kontakt stehen. Somit wird der Linearaktor 100 mit dem Dichtungsring 155 und dem Dichtungsring 155 geschlossen, wobei die Dichtungselemente dieser Dichtungsringe eine axiale Beweglichkeit der Kolbenstange 10 gestatten.

Nachfolgend wird der Rotoraktor 200 sowie dessen Aufbau näher erläutert.

Der Rotoraktor 200 umfasst ein Gehäuse 210, das gleichzeitig als Statorträger dient, und an seiner Innenseite einen Stator 215 aufnimmt. Das Gehäuse 210 ist mittels mehrerer Schrauben 211 mit dem Zwischenring 170 verbunden.

Mittig im Gehäuse 210 bzw. mittig zum Stator 215 verläuft abschnittsweise die Kolbenstange 10, die innerhalb des Gehäuses 210 endet. Am Ende der Kolbenstange 10 ist die Kolbenstangenverlängerung 20 mittels Schrauben 21 befestigt. Hierzu sind in der als Hohlwelle ausgebildeten Kolbenstangenverlängerung 20 Öffnungen 22 vorbereitet, um die Schrauben 21 in axialer Richtung in die Kolbenstangenverlängerung 20 einzuführen und mit der ebenfalls als Hohlwelle ausgebildeten Kolbenstange 10 zu verschrauben.

Umlaufend um die Kolbenstange 10 ist ein Motorläufer 220 vorgesehen, welcher Motorläufer 220 in Zusammenwirkung mit dem Motorstator 110 eine Drehbewegung der Kolbenstange 10 initiiert. Der Motorläufer 220 ist dabei auf einem Träger 221 vorgesehen, der an einem Vorsprung 20A der Kolbenstangenverlängerung 20 und an einem Abstandshalter 222 fixiert ist, welcher Abstandshalter 222 auf die Kolbenstange aufgepresst wurde. Somit wird der Motorläufer beabstandet zum Außenumfang der Kolbenstange 10 gehalten.

An der dem Zwischenring 170 gegenüberliegenden Seite des Gehäuses 210 ist ein Ring 310 mit dem Gehäuse 210 verschraubt, welcher Ring 310 ferner einen Dichtungsring 315 aufnimmt, dessen Dichtungselemente mit der Kolbenstangenverlängerung 20 in Kontakt stehen. Der Ring 310 ist über einen Kanal 311, in dem ein Luftfilterelement aufgenommen ist, mit einer Hydraulikleitung 50 versehen, die mit einem Anschluss 312 verbunden ist. Am Anschluss 312 ist die Hydraulikleitung 50 angebracht, die mit der Ventilbaugruppe 110 in Verbindung steht und außerhalb des Gehäuses 210 und beabstandet hierzu verläuft.

Benachbart zum Ring 310 ist ein weiteres hydrostatisches Lager 320 vorgesehen, welches die Kolbenstangenverlängerung 20 abgestützt. Innerhalb des hydrostatischen Lagers 320 verläuft in axialer Richtung eine Bohrung 321. Ferner weist das hydrostatische Lager 320 einen in axialer Richtung ausgerichteten Kanal 322 auf, über den das Lecköl nach den hydrostatischen Lager 320 zusammen und zurückgeführt wird. Die Kanäle 313 und 322, die miteinander in Verbindung stehen, sind über einen weiteren Kanal 332 im nachfolgenden beschriebenen Anschlussstück 330 mit einem Anschluss 333 verbunden. Das Anschlussstück 330 ist mit der Verbindungsleitung 40 fluidmäßig in Kontakt, so dass mit den bereits zu vor beschriebenen hydrostatischen Lagern 130, 140 des Linearaktors 100 ein gemeinsames Leckölsystem ausgebildet wird.

Benachbart zum hydrostatischen Lager 320 ist ein Anschlussstück 330 vorgesehen, das Durchgangsbohrungen 331 aufweist, in welche Durchgangsbohrungen 331 Schrauben eingeführt wird. Die Schrauben dringen entsprechend durch Bohrungen 331 des Anschlussstücks 330 sowie Bohrungen 321 des hydrostatischen Lagers 320, und sind in entsprechende Gewinde des Rings 310 eingeschraubt. Auf diese Weise wird das Anschlussstück 330 sowie das hydrostatische Lager 320 mit dem Ring 310 verspannt.

Innerhalb des Anschlussstücks 330 ist ein Dichtungsring 335 vorgesehen, der mittels Schrauben mit dem Anschlussstück 330 verbunden ist, welcher Dichtungsring 335 Dichtungselemente aufweist, die mit der Kolbenstangenverlängerung 20 in Kontakt stehen.

Am Anschlussstück 330 ist ferner an der dem hydrostatischen Lager gegenüberliegenden Seite mittels Schrauben 334 ein Zylindergehäuse 340 befestigt, welches Zylindergehäuse 340 durch eine mittels Schrauben 342 angebrachten Abdeckung 341 verschlossen ist. Innerhalb des Zylindergehäuses 340 ist ein Hohlraum 343 ausgebildet. In diesen Hohlraum 343 dringt die Kolbenstangenverlängerung 20 ein.

An einem Endabschnitt der Kolbenstangenverlängerung 20 ist ein rotatorisches Messsystem 360 angebracht, mit dem eine Drehbewegung der Kolbenstangenverlängerung 20, und somit der Kolbenstange 10, erfasst werden kann.

Insbesondere ist am Ende der Kolbenstangenverlängerung 20 eine Abdeckplatte 25 montiert, welche Abdeckplatte 25 mittig eine Durchgangsöffnung 25A aufweist. Am Endabschnitt der Kolbenstangenverlängerung 20 ist eine durch die Abdeckplatte 25 verdeckte Vertiefung 26 ausgebildet, die gegenüber dem Innendurchmesser der als hohle Welle ausgebildeten Kolbenstangenverlängerung 20 einen größeren Durchmesser aufweist. Auf dem derart ausgebildeten Absatz ist ein Messelement 27 montiert, welches Messelement 27 eine Durchgangsöffnung 27A aufweist.

An der Abdeckung 341 ist mittig ein lineares Messsystem 350 befestigt, das einen Stift 355 aufweist, der durch die Abdeckung 341 dringt und sich ferner durch die Durchgangsöffnung 25A der Abdeckplatte 25 sowie die Durchgangsöffnung 27A des Messelements 27 erstreckt.

Somit kann durch das lineare Messsystem 350 eine lineare Relativbewegung zwischen dem an der Kolbenstangenverlängerung 20 montierten Messelement 27 und dem Stift 355 erfasst werden.

Auch wenn im Rahmen der vorliegend beschriebenen ersten Ausführungsform der Aktor 1 einen Linearaktor 100 (hydraulischen Betätigungsabschnitt), einen Rotoraktor 200 (Drehbetätigungsabschnitt) sowie ein Messsystem 300 in der genannten Reihenfolge aufweist, und die Kolbenstange aus dem Linearaktor hervorragt, kann es gemäß weiteren Modifikationen vorgesehen sein, den Rotoraktor, den Linearaktor und das Messsystem in dieser Reihenfolge vorzusehen.

Auch wenn im Rahmen der vorliegend beschriebenen ersten Ausführungsform der Linearaktor 100 (hydraulischen Betätigungsabschnitt), der Rotoraktor 200 (Drehbetätigungsabschnitt) sowie das Messsystem 300 in axialer Richtung nacheinander vorgesehen sind, kann das Messsystem beispielsweise auch seitlich angebracht sein.

Auch wenn der beschriebene Aktor 1 bevorzugt für Prüfzwecke eingesetzt wird, kann es gemäß einer weiteren Ausführungsform vorgesehen sein, den Aktor zum Bewegen von Bauteilen oder Elementen in einer Werkzeugmaschine oder einer anderen Maschine einzusetzen.

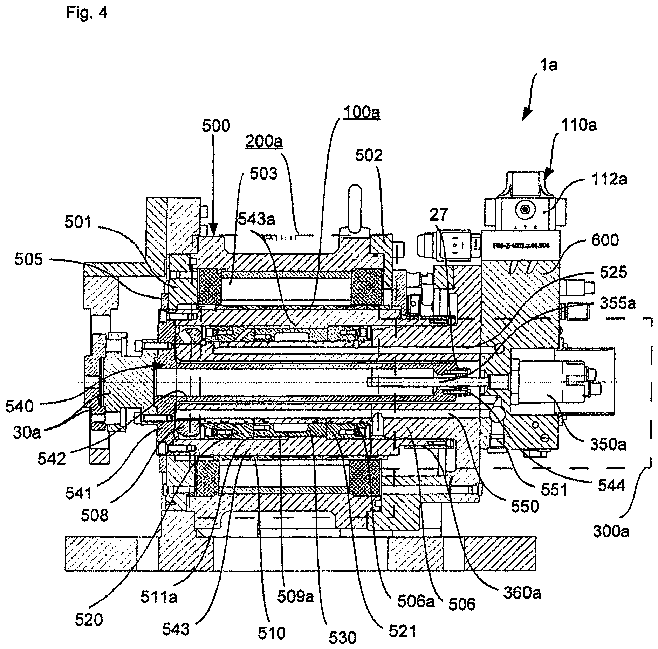

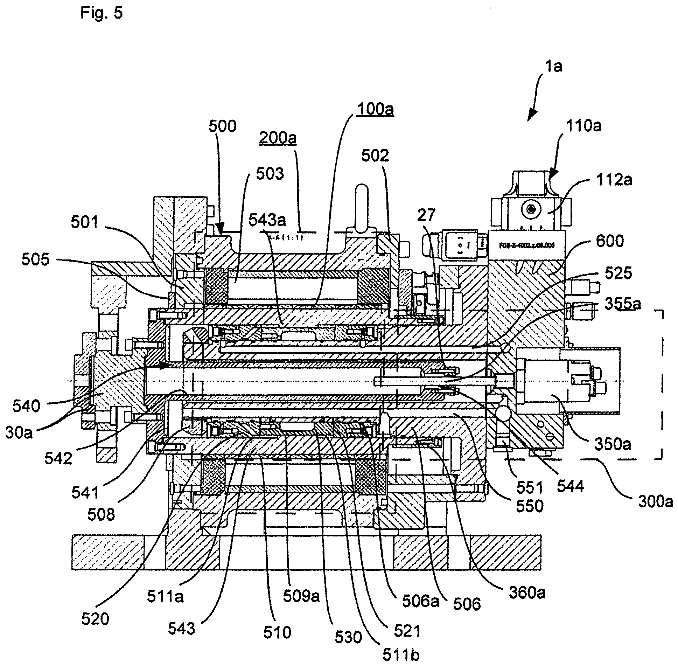

In Figuren 4-7 wird eine zweite Ausführungsform eines erfindungsgemäßen Aktors 1a dargestellt.

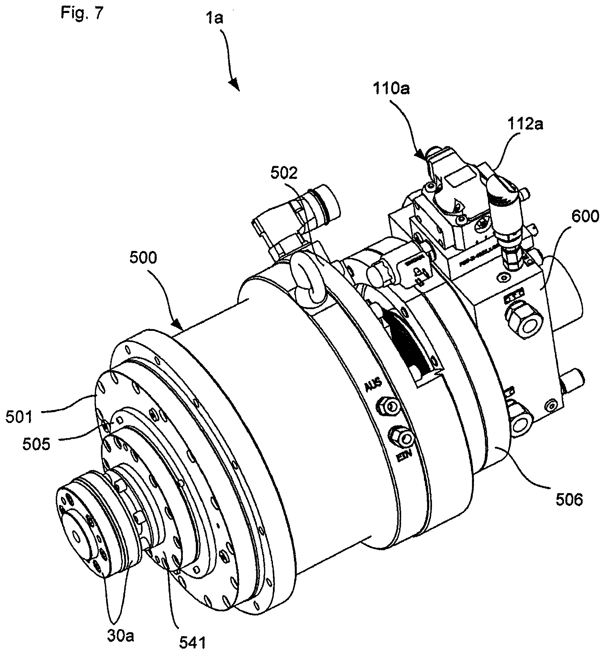

In Figur 7 wird dabei eine perspektivische Zeichnung der zweiten Ausführungsform dargestellt, der die kompakte Bauform des Aktors 1a zu entnehmen ist. Wie nachfolgend anhand der detaillierteren Schnittansichten erläutert umfasst der Aktor 1a einen Anschlussblock 600 mit einer Ventilbaugruppe 110a, welche ein Servoventil 112a aufweist. Ferner sind eine mit dem Anschlussblock 600 verbundene Basiswelle 506, ein Motorstator(abschnitt) 503 sowie ein Deckel 501 vorgesehen.

An einem Endbereich des Aktors 1a ist ein Befestigungselement 30a vorgesehen, das ein mehrteiliges Bauteil ist. In der in den Figuren 4-7 dargestellten Ausführungsform ist das Befestigungselement 30a zweiteilig ausgeführt und umfasst eine Befestigungsplatte sowie einen Verbindungsabschnitt zur Anbringung an der Welle 540, insbesondere am Flansch 541 der Kolbenstangenverlängerung 542.

Am Befestigungselement 30a kann eine Prüfkomponente beispielsweise mittels einer Schraubverbindung angebracht werden.

Die in den Fig. 4-7 dargestellte zweite Ausführungsform unterscheidet sich von der zuvor beschriebenen ersten Ausführungsform im Wesentlichen darin, dass der hydraulische Betätigungsabschnitt und der Drehbetätigungsabschnitt parallel zueinander angeordnet sind, wohingegen die zuvor beschriebene erste Ausführungsform eine Reihenanordnung vorschlägt. Die parallele Anordnung des Drehbetätigungsabschnitts und des hydraulischen Betätigungsabschnitts führt zu einer äußerst kompakten Bauweise, da diese - in axialer Richtung betrachtet - in einem benachbarten oder überlappenden Bereich angreifen und die Welle somit relativ kurz ausgeführt werden kann.

Der Aktor 1a gemäß der zweiten Ausführungsform umfasst ein Gehäuse 500, welches Gehäuse 500 einen zylinderförmigen Hohlraum ausbildet. Das Gehäuse 500 wird teilweise von einer ersten Seite mittels eines Deckels 501 geschlossen, welcher Deckel 501 mit Hilfe von Schrauben befestigt wird. An einer weiteren Seite des Gehäuses 500 ist ein Zwischenring 502 angebracht, der das Gehäuse 500 von dieser weiteren Seite teilweise schließt.

An einem Innenumfang des Gehäuses 500 ist ein Motorstator 503 vorgesehen, der Teil des elektrischen Drehbetätigungsabschnitts ist. Innerhalb des Motorstators 503 ist eine Welle 540, die eine sogenannte Summierungswelle 543 umfasst, beweglich angeordnet, wobei die Summierungswelle 543 die eine Vielzahl von Dauermagneten 510 an ihrem Außenumfang aufnimmt. Bevorzugt sind die Dauermagnete 510 unter Verwendung eines Haftmittels an der Summierungswelle 543 angebracht.

Die Summierungswelle 543 der zweiten Ausführungsform ist in ihrer Funktion mit der Kolbenstange 10 der ersten Ausführungsform vergleichbar. Der Begriff "Summierungswelle" wird jedoch im Rahmen der Beschreibung der zweiten Ausführungsform zur besseren Übersicht verwendet.

Die Summierungswelle 543 wird mittels zweier hydrostatischer Lager 520, 521 gegenüber einer innerhalb der Summierungswelle 543 verlaufenden Basiswelle 506 abgestützt. Die Basiswelle 506 erstreckt sich in axialer Richtung durch das Gehäuse 500 und ist über einen Flansch mit dem Zwischenring 502, und somit mit dem Gehäuse 500, verbunden. Nachdem die Basiswelle 506 fest am Gehäuse 500 angebracht ist, kann die Basiswelle 506 wie nachfolgend erläutert eine Abstützung beweglicher Bauteile im Gehäuse 500 bereitstellen.

An der Basiswelle 506 ist an einem freien Ende eine Spannmutter 508 auf ein Außengewinde in einem Endabschnitt der Basiswelle 506 aufgeschraubt, welche die hydrostatischen Lager 520, 521 und einen zwischen den hydrostatischen Lagern 520, 521 angeordnete Kolbenelement 530 (Kolbenklemmung), die Teil des hydraulischen Betätigungsabschnitts ist, gegen einen Vorsprung 506a der Basiswelle 506 drückt bzw. verspannt. Das Kolbenelement 530 weist Umfangsnuten 509a auf.

Innerhalb der Basiswelle 506 verläuft in axialer Richtung ein Hydrostatikölkanal 525, der mit den hydrostatischen Lagern 520, 521 in Verbindung steht und diese mit Öl versorgt. Ferner ist in der Basiswelle 506 ein Leckölkanal 550 angeordnet, der Teil eines Leckölsystems ist und von den hydrostatischen Lagern austretendes Öl aufnimmt und zu einer Ausgangöffnung 551 führt.

Innerhalb des Innenumfangs der als Hohlwelle ausgebildeten Basiswelle 506 ist abschnittsweise eine Welle 540 angeordnet, die eine Kolbenstangenverlängerung 542 sowie in einem Bereich außerhalb der Basiswelle 506 einen Flansch 541 aufweist, welcher Flansch 541 mittels einer Schraubverbindung mit der Summierungswelle 543 verbunden ist. Somit sind Abschnitte der Welle 540, nämlich die Kolbenstangenverlängerung 542, teilweise innerhalb der Basiswelle 506 angeordnet, während sich weitere Abschnitt der Welle 540, nämlich die Summierungswelle 543, außerhalb der Welle 540 erstrecken.

In der vorliegenden Ausführungsform sind der Flansch 541 sowie die Kolbenstangenverlängerung 542 einstückig ausgeführt, während die die Summierungswelle 543 am Flansch 541 befestigt ist. In einer weiteren Modifikation ist es auch möglich, den Flansch 541, die Kolbenstangenverlängerung 542 sowie die Summierungswelle 543 als ein einstückiges Bauteil bereitzustellen.

Die Kolbenstangenverlängerung 542, der Flansch 541 sowie die Summierungswelle 543 bilden somit gemeinsam eine Welle 540 aus, die, wie nachfolgend detaillierter erläutert, einer translatorischen und einer rotatorischen Bewegung unterworfen wird.

Der Flansch 541 dient ferner der Anbringung des Befestigungselements 30a. In der in den Figuren 4-7 dargestellten Ausführungsform ist die Befestigungsplatte 30a zweiteilig ausgeführt. Alternativ kann die Befestigungsplatte 30a jedoch auch wie in der ersten Ausführungsform einteilig ausgebildet sein. Ähnlich wie in der ersten Ausführungsform wird das Befestigungselement 30a der zweiten Ausführungsform mittels Schrauben 31a am Flansch 541 befestigt.

Das Befestigungselement 30a kann mit einem nicht dargestellten Prüfgegenstand verbunden werden, der durch den Aktor 1a mittels einer linearen und/oder rotatorischen Bewegung der Welle 540 entsprechenden Bewegungen, Kräften und/oder Momenten ausgesetzt werden soll.

Zur Abdichtung der Welle 540, die in Axialrichtung hin und her bewegt werden kann, ist ferner eine Scheibe 505 vorgesehen, die mittels einer Schraubverbindung mit dem Deckel 501 verbunden ist und den äußeren Umfang des Flanschs 541 der Welle 540 umfasst.

Der hydraulische Betätigungsabschnitt 100a umfasst einen in radialer Richtung nach innen weisenden Vorsprung 543a der Summierungswelle 543 sowie das zwischen den hydrostatischen Lagern 520, 521 angeordneten Kolbenelement 530.

Im teilweise ausgefahrenen Zustand werden an jeweils einer Seite zum Vorsprung 543a der Summierungswelle 543 und dem Kolbenelement 530 eine erste Zylinderkammer 511a sowie eine zweite Zylinderkammer 511b gebildet. Befindet sich der Aktor 1a im eingefahrenen Zustand (Fig. 4), so ist in der beschriebenen Ausführungsform die erste Zylinderkammer 511a vorhanden, während das hydrostatische Lager 521 annähernd am Vorsprung 543a anliegt. In diesem Zustand hat die erste Zylinderkammer 511a eine maximale Ausdehnung und die zweite Zylinderkammer 511b eine minimale Ausdehnung.

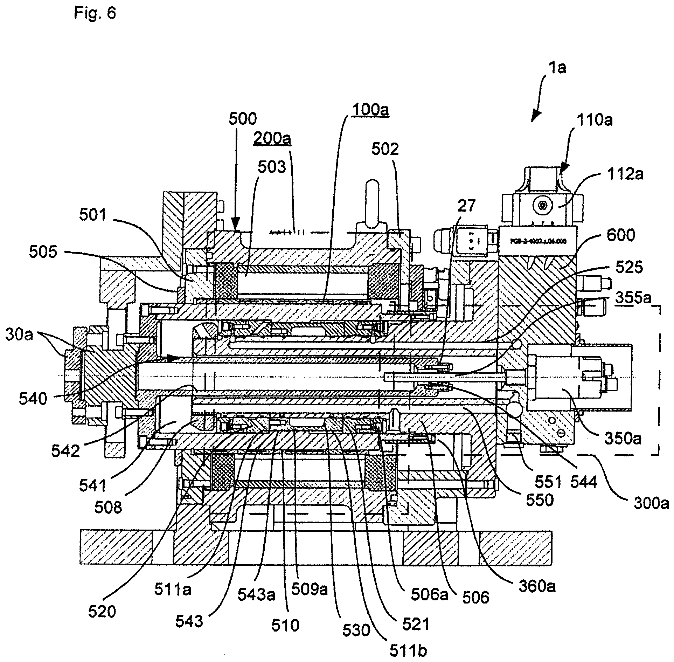

Zur Durchführung einer Axialbewegung des Aktors 1a wird die zweite Zylinderkammer 511b mit einem Hydraulikfluid gefüllt, sodass sich die Welle 540 in axialer Richtung entlang der Basiswelle 506 bewegt. Befindet sich der Aktor 1a im vollständig ausgefahrenen Zustand (Fig. 6), liegt das hydrostatische Lager 520 annähernd am Vorsprung 543a der Summierungswelle 543 an, so dass die zweite Zylinderkammer 511b ihre größte Ausdehnung erfährt.

An der Basiswelle 506 ist ferner ein Anschlussblock 600 angebracht, der zum einen eine Ventilbaugruppe 110a mit einem Servoventil 112a (ähnlich zum Servoventil 110 der ersten Ausführungsform) und ferner in Axialrichtung der Welle 540 ein lineares Messsystem 350a aufnimmt. Das lineare Messsystem 350a umfasst einen Stift 355a, der sich abschnittsweise in der als Hohlwelle ausgebildeten Kolbenstangenverlängerung 542 erstreckt. Hierzu weist die Kolbenstangenverlängerung 542 eine zum Anschlussblock 600 weisende Durchgangsbohrung 544 auf, die einen größeren Innendurchmesser als der Außendurchmesser des Stifts 355a aufweist.

Die Funktion des linearen Messsystems 350a ist entsprechend demjenigen, das bereits im Rahmen der ersten Ausführungsform beschrieben wurde. Das lineare Messsystem 350a weist den Stift 355 auf, der durch die Abdeckung dringt und sich ferner durch Durchgangsöffnung des Messelements 27 erstreckt.

Somit kann durch das lineare Messsystem 350a eine lineare Relativbewegung zwischen dem an der Kolbenstangenverlängerung montierten Messelement 27 und dem Stift 355a erfasst werden.

Zusätzlich ist, entsprechend der ersten Ausführungsform, ein rotatorisches Messsystem 360a vorgesehen, welches im Falle der zweiten Ausführungsform am Zwischenring 502 angebracht ist und eine Drehbewegung der Summierungswelle 543 erfasst.

Der Betrieb des in den Figuren 4-7 dargestellten Aktors 1a wird nachfolgend beschrieben. Ausgehend vom eingefahrenen Zustand wird ein Hydraulikfluid in die erste Zylinderkammer 511a gedrückt und somit eine Axialbewegung der Welle 540 bewirkt. Gleichzeitig zur Axialbewegung wird mittels des elektrischen Drehbetätigungsabschnitts (Motorstator 503 und Läufers 510) eine Drehbewegung an der Welle 540 induziert.

Auf diese Weise werden eine axiale Bewegung und eine Drehbewegung an der Welle 540 vereint. Somit kann ein Prüfgegenstand, der am Befestigungselement 30a angebracht ist, gleichzeitig einer axialen als auch einer rotatorischen Oszillationsbewegung unterworfen werden. Jede dieser Bewegungen wird über das entsprechende Messsystem 350a, 360a überwacht und ggf. geregelt.

Auch wenn in den Figuren 4-7 nicht explizit gezeigt, kann der Aktor 1a der zweiten Ausführungsform ähnlich wie der Aktor 1 der ersten Ausführungsform einen oder mehrere Pulsationsdämpfer umfassen, der bzw. die Pulsationen der Hydraulikflüssigkeit innerhalb der Leitung 525 dämpft. Dies ermöglicht eine hochgenaue Betätigung der Welle 540.

## Patentansprüche

1. Aktor (1a), insbesondere zur Verwendung in einem Prüfstand, aufweisend:
eine Welle (540), wobei ein hydraulischer Betätigungsabschnitt (100a) eingerichtet ist, die Welle (540) axial zu bewegen,
wobei sich die Welle (540) ferner zumindest abschnittsweise durch einen Drehbetätigungsabschnitt (200a) erstreckt, welcher Drehbetätigungsabschnitt (200a) einen Stator (503) aufweist, wobei im Drehbetätigungsabschnitt (200a) ein an der Welle (540) befestigter Läufer (510) vorgesehen ist,
wobei die Welle (540) eine Kolbenstangenverlängerung (542) sowie eine mit der Kolbenstangenverlängerung (542) verbundene Summierungswelle (543) aufweist, wobei die Summierungswelle (543) einen Hohlraum aufweist und innerhalb des Hohlraums der Summierungswelle (543) zumindest eine Zylinderkammer (511a, 511b) des hydraulischen Betätigungsabschnitts angeordnet ist.

2. Aktor (1a) gemäß Anspruch 1, **dadurch gekennzeichnet, dass** die Summierungswelle (543) zumindest abschnittsweise koaxial zur Kolbenstangenverlängerung (542) angeordnet ist.

3. Aktor (1a) gemäß einem der vorangegangenen Ansprüche, **dadurch gekennzeichnet, dass** die Summierungswelle (543) zur Ausbildung des Drehbetätigungsabschnitts mit einem elektrischen Antrieb (503, 540, 510) gekoppelt ist, der die Summierungswelle (543) in Drehung um ihre Achse versetzen kann.

4. Aktor gemäß einem der vorangegangenen Ansprüche, **dadurch gekennzeichnet, dass** die Summierungswelle (543), der Drehbetätigungsabschnitt (200a) und der hydraulische Betätigungsabschnitt (100a) koaxial zueinander angeordnet sind.

5. Aktor (1a) gemäß einem der vorangegangenen Ansprüche, bei dem die Welle (540) durch hydrostatische Lager (520, 521) gelagert ist, wobei insbesondere im hydraulischen Betätigungsabschnitt (100a) zwei hydrostatische Lager (520, 521) vorgesehen sind.

6. Aktor (1a) gemäß einem der vorangegangenen Ansprüche, **dadurch gekennzeichnet, dass** die Summierungswelle (543) und/oder die Kolbenstangenverlängerung (542) als Hohlwelle ausgebildet sind.

7. Aktor (1a) gemäß einem der vorangegangenen Ansprüche, **dadurch gekennzeichnet, dass** der hydraulische Betätigungsabschnitt (100a) ein Gehäuse umfasst, welches Gehäuse zwei bevorzugt in axialer Richtung beabstandete Hydraulikleitungen aufweist, wobei in jeweils einer der Hydraulikleitungen eine Hydraulikflüssigkeit zugeführt wird, um die Welle axial zu bewegen, wobei bevorzugt jede Hydraulikleitung mit einem Pulsationsdämpfer fluidmäßig in Kontakt steht.

8. Aktor (1a) gemäß einem der vorangegangenen Ansprüche, **dadurch gekennzeichnet, dass** der Stator (503) des Drehbetätigungsabschnitts (200a) an einem Innenumfang eines bevorzugt zylinderförmigen oder eckigen Gehäuses (500) des Drehbetätigungsabschnitts (200a) vorgesehen ist.

9. Aktor (1a) gemäß einem der vorangegangenen Ansprüche, **dadurch gekennzeichnet, dass** die Welle (540) benachbart zum hydraulischen Betätigungsabschnitt (100a) vorsteht, wobei am vorstehenden Endabschnitt der Welle (540) ein Befestigungselement (30a) zur Anbringung eines Prüfkörpers montiert ist.

10. Aktor (1a) gemäß einem der vorangegangenen Ansprüche, **dadurch gekennzeichnet, dass** der Aktor (1a) ferner ein Messsystem (300, 300a) aufweist, wobei das Messsystem (300a) ein rotatorisches Messsystem (360a) zur Erfassung einer Drehbewegung der Welle (540) sowie ein lineares Messsystem (350a) zur Erfassung einer axialen Bewegung der Welle (540) aufweist.

11. Aktor (1a) gemäß einem der vorangegangenen Ansprüche, **dadurch gekennzeichnet, dass** der Drehbetätigungsabschnitts (200a) als bürstenloser Wechselstrommotor ausgebildet ist.

12. Aktor (1a) gemäß einem der vorangegangenen Ansprüche, bei dem sich zwischen der Kolbenstangenverlängerung (542) und der Summierungswelle (543) zumindest abschnittsweise eine bevorzugt feststehende Basiswelle (506) erstreckt, an deren Außenumfang hydrostatische Lager (520, 521) zur Abstützung der Summierungswelle (543) vorgesehen sind.

13. Aktor (1a) gemäß einem der vorangegangenen Ansprüche, bei dem, insbesondere zwischen den hydrostatischen Lagern (520, 521), ein Kolbenelement (530) an der Basiswelle (506) vorgesehen ist, wobei das Kolbenelement (530) insbesondere durch eine Presspassung an der Basiswelle (506) aufgebracht ist.

14. Aktor (1a) gemäß Anspruch 13, bei dem an einem freien Ende der Basiswelle (506) eine Spannmutter (508) auf ein Außengewinde in einem Endabschnitt der Basiswelle (506) aufgeschraubt ist, die die hydrostatischen Lager (520, 521) und das zwischen den hydrostatischen Lagern (520, 521) angeordnete Kolbenelement (530) verspannt.

15. Aktor (1a) gemäß einem der vorangegangenen Ansprüche, bei dem der hydraulische Betätigungsabschnitt einen in radialer Richtung nach innen weisenden Vorsprung (543a) der Summierungswelle (543) sowie ein zwischen hydrostatischen Lagern (520, 521) angeordnetes Kolbenelement (530) aufweist.

## Claims

1. Actuator (1a), in particular for use in a test stand, having:
a shaft (540), wherein a hydraulic actuation section (100a) is configured to move the shaft (540) axially,
wherein the shaft (540) also extends, at least in sections, through a rotary actuation section (200a), said rotary actuation section (200a) being provided with a stator (503), wherein a rotor (510) fixed to the shaft (540) is provided in the rotary actuation section (200a),
wherein the shaft (540) is provided with a piston rod extension (542) and a summation shaft (543) connected with the piston rod extension (542), wherein the summation shaft (543) has a cavity and at least one cylinder chamber (511a, 511b) of the hydraulic actuation section is arranged within the cavity of the summation shaft (543).

2. Actuator (1a) according to claim 1, **characterised in that** the summation shaft (543) is, at least in sections, arranged coaxially with the piston rod extension (542).

3. Actuator (1a) according to one of the preceding claims, **characterised in that**, in order to form the rotary actuation section, the summation shaft (543) is coupled with an electrical drive (503, 540, 510) which can set the summation shaft (543) into rotation around its axis.

4. Actuator according to one of the preceding claims, **characterised in that** the summation shaft (543), the rotary actuation section (200a) and the hydraulic actuation section (100a) are arranged coaxially in relation to one another.

5. Actuator (1a) according to one of the preceding claims, wherein the shaft (540) is supported by hydrostatic bearings (520, 521), wherein two hydrostatic bearings (520, 521) are provided, in particular in the hydraulic actuation section (100a).

6. Actuator (1a) according to one of the preceding claims, **characterised in that** the summation shaft (543) and/or the piston rod extension (542) are designed as hollow shafts.

7. Actuator (1a) according to one of the preceding claims, **characterised in that** the hydraulic actuation section (100a) comprises a housing, said housing having two hydraulic lines, preferably spaced apart in an axial direction, wherein a hydraulic fluid is fed in one of the hydraulic lines in order to move the shaft axially, wherein preferably each hydraulic line is in fluidic contact with a pulsation damper.

8. Actuator (1a) according to one of the preceding claims, **characterised in that** the stator (503) of the rotary actuation section (200a) is provided on an inner circumference of a preferably cylindrical or square housing (500) of the rotary actuation section (200a).

9. Actuator (1a) according to one of the preceding claims, **characterised in that** the shaft (540) projects adjacent to the hydraulic actuation section (100a), wherein a fastening element (30a) is mounted on the projecting end section of the shaft (540) for attachment of a test specimen.

10. Actuator (1a) according to one of the preceding claims, **characterised in that** the actuator (1a) is also provided with a measuring system (300, 300a), wherein the measuring system (300a) comprises a rotary measuring system (360a) for detecting a rotary movement of the shaft (540) and a linear measuring system (350a) for detecting an axial movement of the shaft (540).

11. Actuator (1a) according to one of the preceding claims, **characterised in that** the rotary actuation section (200a) is designed as a brushless AC motor.

12. Actuator (1a) according to one of the preceding claims, wherein a preferably fixed base shaft (506) extends, at least in sections, between the piston rod extension (542) and the summation shaft (543), on the outer circumference of which hydrostatic bearings (520, 521) are provided to support the summation shaft (543).

13. Actuator (1a) according to one of the preceding claims, wherein a piston element (530) is provided on the base shaft (506), in particular between the hydrostatic bearings (520, 521), wherein the piston element (530) is in particular attached to the base shaft (506) by means of a press fit.

14. Actuator (1a) according to claim 13, wherein at a free end of the base shaft (506) a clamping nut (508) is screwed onto an external thread on an end section of the base shaft (506) which clamps the hydrostatic bearings ( 520, 521) and the piston element (530) arranged between the hydrostatic bearings (520, 521).

15. Actuator (1a) according to one of the preceding claims, wherein the hydraulic actuation section has a projection (543a) on the summation shaft (543) facing inwards in a radial direction and a piston element (530) arranged between hydrostatic bearings (520, 521).

## Revendications

1. Actionneur (1a), en particulier pour utilisation dans un banc d'essai, présentant :
un arbre (540), dans lequel une section de commande hydraulique (100a) est aménagée pour déplacer axialement l'arbre (540),
dans lequel l'arbre (540) s'étend en outre au moins par sections à travers une section de commande de rotation (200a), laquelle section de commande de rotation (200a) présente un stator (503), dans lequel il est prévu dans la section de commande de rotation (200a) un rotor (510) fixé à l'arbre (540),
dans lequel l'arbre (540) présente un prolongement de tige de piston (542) ainsi qu'un arbre d'appoint (543) raccordé au prolongement de tige de piston (542), dans lequel l'arbre d'appoint (543) présente un espace creux et au moins une chambre cylindrique (511a, 511b) de la section de commande hydraulique est agencée à l'intérieur de l'espace creux de l'arbre d'appoint (543).

2. Actionneur (1a) selon la revendication 1, **caractérisé en ce que** l'arbre d'appoint (543) est agencé au moins par sections coaxialement au prolongement de tige de piston (542).

3. Actionneur (1a) selon l'une quelconque des revendications précédentes, **caractérisé en ce que** l'arbre d'appoint (543) est couplé pour former la section de commande de rotation à un entraînement électrique (503, 540, 510) qui peut déplacer en rotation l'arbre d'appoint (543) autour de son axe.

4. Actionneur (1a) selon l'une quelconque des revendications précédentes, **caractérisé en ce que** l'arbre d'appoint (543), la section de commande de rotation (200a) et la section de commande hydraulique (100a) sont agencés coaxialement l'un par rapport à l'autre.

5. Actionneur (1a) selon l'une quelconque des revendications précédentes, **caractérisé en ce que** l'arbre (540) est monté sur des paliers hydrostatiques (520, 521), dans lequel il est prévu deux paliers hydrostatiques (520, 521) en particulier dans la section de commande hydraulique (100a).

6. Actionneur (1a) selon l'une quelconque des revendications précédentes, **caractérisé en ce que** l'arbre d'appoint (543) et/ou le prolongement de tige de piston (542) est ou sont conformés en arbre creux.

7. Actionneur (1a) selon l'une quelconque des revendications précédentes, **caractérisé en ce que** la section de commande hydraulique (100a) comprend un boîtier, lequel boîtier présente deux conduites hydrauliques de préférence espacées dans la direction axiale, dans lequel un liquide hydraulique est acheminé dans respectivement l'une des conduites hydrauliques pour déplacer axialement l'arbre, dans lequel, de préférence, chaque conduite hydraulique est en contact fluidique avec un amortisseur d'impulsions.

8. Actionneur (1a) selon l'une quelconque des revendications précédentes, **caractérisé en ce que** le stator (503) de la section de commande de rotation (200a) est disposé sur une périphérie interne d'un boîtier de préférence de forme cylindrique ou polygonale (500) de la section de commande de rotation (200a).

9. Actionneur (1a) selon l'une quelconque des revendications précédentes, **caractérisé en ce que** l'arbre (540) fait saillie au voisinage de la section de commande hydraulique (100a), dans lequel un élément de fixation (30a) est monté sur la section d'extrémité saillante de l'arbre (540) pour y poser un corps d'essai.

10. Actionneur (1a) selon l'une quelconque des revendications précédentes, **caractérisé en ce que** l'actionneur (1a) présente en outre un système de mesure (300, 300a), dans lequel le système de mesure (300a) présente un système de mesure rotatif (360a) pour détecter un mouvement de rotation de l'arbre (540) ainsi qu'un système de mesure linéaire (350a) pour détecter un mouvement axial de l'arbre (540).

11. Actionneur (1a) selon l'une quelconque des revendications précédentes, **caractérisé en ce que** la section de commande de rotation (200a) se présente sous la forme d'un moteur à courant alternatif sans balais.

12. Actionneur (1a) selon l'une quelconque des revendications précédentes, dans lequel s'étend entre le prolongement de tige de piston (542) et l'arbre d'appoint (543) au moins par sections un arbre de base de préférence fixe (506), à la périphérie externe duquel sont disposés des paliers hydrostatiques (520, 521) pour supporter l'arbre d'appoint (543).

13. Actionneur (1a) selon l'une quelconque des revendications précédentes, dans lequel il est prévu en particulier entre les paliers hydrostatiques (520, 521) un élément de piston (530) sur l'arbre de base (506), dans lequel l'élément de piston (530) est appliqué sur l'arbre de base (506) en particulier par un ajustage serré.

14. Actionneur (1a) selon la revendication 13, dans lequel est vissé, à une extrémité libre de l'arbre de base (506), un écrou tendeur (508) sur un filet externe dans une section d'extrémité de l'arbre de base (506), qui place sous tension les paliers hydrostatiques (520, 521) et l'élément de piston (530) agencé entre les paliers hydrostatiques (520, 521).

15. Actionneur (1a) selon l'une quelconque des revendications précédentes, dans lequel la section de commande hydraulique présente une saillie (543a), tournée vers l'intérieur dans la direction radiale, de l'arbre d'appoint (543) ainsi qu'un élément de piston (530) agencé entre les paliers hydrostatiques (520, 521).
